# EUROPEAN PATENT APPLICATION

(11) **EP 0 593 845 A1**
(43) Date of publication of application: **27.04.1994**
(21) Application number: 93106249.1
(22) Date of filing: 16.04.1993
(51) Int. Cl.: B60R 21/16, B60N 2/48

(54) **Air bag for an automobile head cushion activatable upon a rear-end impact**

(30) Priority: 23.10.1992 US 965842
(71) Applicant: TANDBERG DATA A/S, 0808 Oslo 8 (NO)
(72) Inventor: Solhjell, Erik, N-00855 Oslo 8 (NO)
(74) Representative: Goddar, Heinz J., Dr.

(57) **Abstract**

A device for protecting the head of an automobile passenger (30) in the event of a rear-end collision includes an air bag (14) provided in a head cushion (10). An actuation device (22) is provided in the head cushion (10) for inflating the air bag (14), and is activated by a rear-end collision sensor (24) located in the automobile.

## Description

### BACKGROUND OF THE INVENTION

### Field of the Invention

The present invention relates generally to an air bag for an automobile head cushion, and in particular to such an air bag which is activatable in the event of a rear-end impact to the automobile.

### Description of the Prior Art

A number of recent efforts have been made to prevent injuries to automobile drivers and passengers due to automobile collisions. One such effort includes providing air bags mounted behind the dashboard of a passenger compartment, as discussed in U.S. Patent No. 3,837,422 to Schlanger. Other efforts have included a number of arrangements for protecting the head of a passenger in the event of a collision.

For example, a bag can be mounted in a folded state on the back and top of an automobile seat. The bag then inflates upon impact, as discussed in U.S. Patent No. 3,791,666. Further, two inflatable gas cushions can be arranged in the front seat of a car underneath a headrest, such that upon impact, one cushion unfolds in front of and one cushion unfolds behind the headrest, as discussed in U.S. Patent No. 3,779,577. Additionally, a gas cushion can be embodied in an automobile seat, such that the gas cushion, when inflated, acts as a headrest, as discussed in U.S. Patent No. 3,703,313. Nones of these known devices is specifically described as being triggered or activated in the event of rear-end collision or impact although U.S. Patent No. 3,779,577 describes triggering by an "inertial sensor". In order to prevent or minimize the types of injuries or tissue damage commonly referred to as "whiplash" such rear-impact triggering is needed.

A rear-impact, mechanically triggered device is described in U.S. Patent No. 3,397,911. This device is, however, not an air bag, but is a spring-loaded flat cushion which is normally stored in the back of the front seat of a vehicle, and is released upon a rear impact so as to be ejected to, and held in, a position behind the driver's head.

### SUMMARY OF THE INVENTION

It is an object of the present invention to provide an air bag for protecting the head of a passenger in a rear-end automobile collision while maintaining the integrity of the automobile seat. As used herein, "passenger" includes the driver of a vehicle.

The above object is achieved by providing an air bag disposed in a head cushion of an automobile seat positioned behind the head of the seat occupant. A standard actuation device for inflating the air bag is also disposed in the head cushion, and is connected to the air bag. A sensor for sensing a rear-end collision is disposed in, preferably near the rear-end, of the automobile, and is connected to the actuation device disposed in the head cushion.

Other advantages and features of the invention will be readily apparent from the following description of the preferred embodiments, the drawings and claims.

### BRIEF DESCRIPTION OF THE DRAWINGS

Fig. 1 illustrates a perspective view of a device constructed in accordance with the principles of the present invention.

Fig. 2 illustrates a sectional view taken along the lines II - II of Fig. 1, illustrating an air bag in a pre-collision position.

Fig. 3 illustrates a sectional view taken along the lines II - II of Fig. 1, wherein the air bag is in a post-collision position.

Fig. 4 illustrates a side sectional view of a device constructed in accordance with the principles of the present invention, including a rear-end collision sensor.

### DETAILED DESCRIPTION

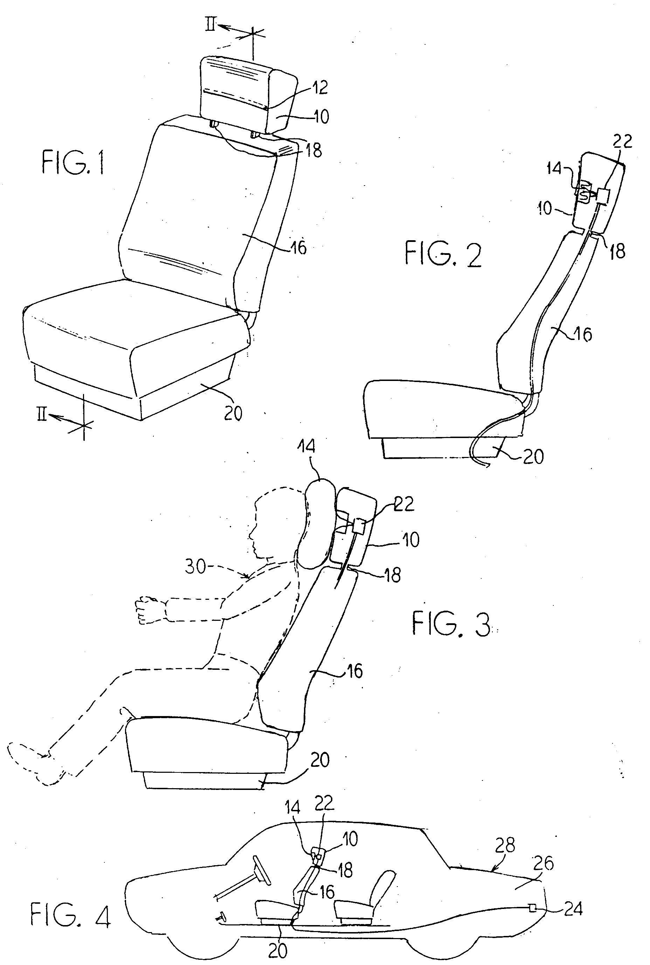

As illustrated in Fig. 1, a suitable head cushion 10 is provided with, for example, a crease 12. An air bag 14 (as illustrated in Fig. 2) is positioned behind the crease 12. The crease 12 can be sealed with a suitable frangible seal, such as a rubber material. The air bag 14 can alternatively be disposed in a head cushion having any suitable exit for the air bag 14 which, like the crease 12, causes the air bag to be inflated toward the back of the head of an occupant 30 (illustrated in FIG. 3) of the seat. The air bag 14 can be constructed using a suitable, known material. The head cushion 10 is connected to an automobile seat 16 by head cushion supports 18. The automobile seat 16 is supported by a suitable seat support 20.

As illustrated in Fig. 2, the air bag 14 is connected to a suitable automatic inflation device 22 disposed in the head cushion 10. For example, one suitable automation device is an electromagnetic valve, as discussed in U.S. Patent No. 3,791,666. In Fig. 2, the air bag 14 is deflated in a pre-collision position in the head rest 10. The air bag 14 is positioned behind the crease 12 (illustrated in Fig. 1).

As illustrated in Fig. 3, in the event of a rear-end collision, the air bag 14 is actuated by the inflation device 22. Actuation of the air bag 14 by the inflation device 22 causes the air bag 14 to project through the crease 12, or other suitable exit, and inflate along the length of the head cushion 10, behind the head of the seat occupant 30, so as to prevent rapid backward (i.e., toward the rear of the automobile) movement of the head, and this preventing or minimizing the type of injury known as "whiplash".

As illustrated in Fig. 4, the inflation device 22 is electrically connected to a suitable sensor 24 for sensing a rear-end collision or impact. Such a sensor can be a suitable rear-end sensor or other suitable shock sensing device, such as the shock sensing device discussed in U.S. Patent No. 3,773,350. The sensor 24 is preferably disposed at or near a rear-end 26 of an automobile 28, however, if the sensor 24 is an inertial sensor, it can theoretically be located anywhere within the automobile 28. The sensor 24 may be a sensor which generates a signal by mechanically sensing an impact, or may sense rapid acceleration ("rapid acceleration" as used herein meaning acceleration greater than experienced by normal, operator-controlled acceleration). The sensor 24 is electrically connected to the actuation device 22 in a convenient manner. For example, the actuation device 22 can be wired to the sensor 24 through a floor of the automobile 28, the seat support 20, the seat 16, and the head cushion support 18. Other types of signal transmission systems may be used, however, as permitted or dictated by the vehicle configuration, such as optical, radio, pneumatic or mechanical signal transmission systems. Although the invention has been described herein in the context of use in an automobile, it will be appreciated that the invention can be used in any type of vehicle, or any type of seating arrangement, wherein the occupant of the seat may be susceptible to whiplash-type injuries. The air bag 14 is disposed in the head rest 10 such that when inflated, the air bag is positioned along both the length and the width of the head cushion 10.

Although various minor modifications may be suggested by those versed in the art, it should be understood that I wish to embody within the scope of the patent granted hereon all such modifications as reasonably and properly come within the scope of my contribution to the art.

The features disclosed in the foregoing description, in the claims and/or in the accompanying drawings may, both, separately and in any combination thereof, be material for realizing the invention in diverse forms thereof.

## Claims

1. A device for protecting a head of an occupant seated in an automobile comprising:
a head support positioned at a back of an automobile seat behind said head of said occupant of said seat;
means for sensing a rapid acceleration of said automobile and for thereupon generating a sensor signal; and
means, normally contained in said head cushion, for inflating behind said head of said occupant upon triggering by said sensor signal.

2. A device as claimed in claim 1, wherein said head cushion has an opening therein and said means for inflating include an air bag disposed behind said opening in said head cushion.

3. A device as claimed in claim 2, wherein said means for inflating includes an actuation device disposed in said head cushion and supplied with said sensor signal, said actuation device connected to said air bag for inflating said air bag.

4. A device as claimed in claim 2, further comprising a frangible seal normally closing said opening.

5. A device as claimed in claim 2, further comprising means for electrically supplying said sensor signal to said means for inflating.

6. A device for protecting a head of an occupant seated in an automobile comprising:
a head support disposed at a back of an automobile seat behind said head of said occupant of said seat;
means for sensing a rapid change in speed of said automobile and for thereupon generating a sensor signal; and
means contained in said head cushion, for inflating behind said head of said occupant upon triggering by said sensor signal.

7. A device as claimed in claim 6, wherein said head cushion has an opening therein and said means for inflating including an air bag disposed behind said opening in said head cushion.

8. A device as claimed in claim 7, wherein said means for inflating includes an actuation device disposed in said head cushion and supplied with said sensor signal, said actuation device connected to said air bag for inflating said air bag.

9. A device as claimed in claim 7, further comprising a frangible seal normally closing said opening.

10. A device as claimed in claim 7, further comprising means for electrically supplying said sensor signal to said means for inflating.

11. A device for protecting a head of an occupant seated in an automobile comprising:
a head support removably connectable to an automobile seat;
an air bag disposed in said head support behind a frangible seal on an outer surface of said head support;
means for sensing a rapid change in speed of said automobile and for thereupon generating a sensor signal; and
means for activating said air bag, disposed in said head cushion and connected to said air bag and to said means for sensing a change in speed of said automobile, for forcing said air bag through said frangible seal and for inflating said air bag.
